# EUROPEAN PATENT APPLICATION

(11) **EP 3 395 481 A1**
(43) Date of publication of application: **31.10.2018**
(21) Application number: 18169725.1
(22) Date of filing: 27.04.2018
(51) Int. Cl.: B22F 3/105, B33Y 30/00

(54) **POWDER BED FUSION APPARATUS AND METHODS**

(30) Priority: 27.04.2017 GB 201706705
(71) Applicant: Renishaw PLC, Wotton-under-Edge, Gloucestershire GL12 8JR (GB)
(72) Inventor: MEINERS, Wilhlem, D-80686 Munich (DE); EIBL, Florian, 52074 Munich (DE); KEMAKOLAM, Nneji, Wotton-under-Edge, Gloucestershire GL12 8JR (GB); SUTCLIFFE, Christopher, John, Stone, Staffordshire ST15 0SH (GB); DERRER, Jan-Peter, 72124 Pliezhausen (DE); HUESKEN, Carlo, 72124 Pliezhausen (DE)
(74) Representative: Matthews, Paul

(57) **Abstract**

This invention concerns a powder bed fusion apparatus in which an object is built in a layer-by-layer manner. The apparatus comprises a build sleeve 290, 690, 790, 890, 990, 1090, 1190, a build platform 230, 630, 830, 930, 1030, 1130 for supporting a powder bed and the build platform 230, 630, 830, 930, 1030, 1130 lowerable in the build sleeve 290, 690, 790, 890, 990, 1090, 1190. A heating element 201, 801, 901, 1001, 1101, 895, 896, 995, 996, 1095, 1096, 1195, 1196 is integrated in or located on the build platform 230, 630, 830, 930, 1030, 1130 or the build sleeve 290, 690, 890, 990, 1090, 1190. A seal 209, 210, 211, 809, 810, 811 is provided for sealing a gap between the build platform 230, 630, 830, 930, 1030, 1130 and the build sleeve 290, 690, 890, 990, 1090, 1190 to prevent powder from passing through the gap. A build chamber 202 is provided for maintaining an inert atmosphere both above and below the build platform 230, 630, 830, 930, 1030, 1130.

## Description

### Field of Invention

This invention concerns powder bed fusion apparatus and methods in which selected areas of a powder bed are solidified in a layer-by-layer manner to form a workpiece. The invention has particular, but not exclusive application, to selective laser melting (SLM) and selective laser sintering (SLS) apparatus.

### Background

Powder bed fusion apparatus produce objects through layer-by-layer solidification of a material, such as a metal powder material, using a high-energy beam, such as a laser or electron beam. A powder layer is formed across a powder bed contained in a build sleeve by lowering a build platform to lower the powder bed, depositing a heap of powder adjacent to the lowered powder bed and spreading the heap of powder with a wiper across (from one side to another side of) the powder bed to form the layer. Portions of the powder layer corresponding to a cross-section of the workpiece to be formed are then solidified through irradiating these areas with the beam. The beam melts or sinters the powder to form a solidified layer. After selective solidification of a layer, the powder bed is lowered by a thickness of the newly solidified layer and a further layer of powder is spread over the surface and solidified, as required.

An example of such a device is disclosed in US6042774. The build platform disclosed in US6042774 comprises a cooling conduit formed of meandering loops of a copper tube. The build platform is cooled during the entire building process. A gap between the edge of the build platform and the inner wall of the container is sealed by a flexible sealing lip surrounding the outer edge of the build platform.

US2004/0056022 A1 discloses a heating plate that is placed in the building platform or integrated in the surface of the building platform. The heating plate is designed and thermally insulated from the building platform by an insulation layer in such a manner that is reaches temperatures of at least 500°C during heating. The heating plate is placed at a distance from the side walls. Insulation between the hot component and the side walls of the construction chamber is assumed by the surrounding powder, because the thermal conductivity of spread powder is very low. With the device, metallic components are maintained at temperatures above 500°C during the building process thereby reducing the danger of tensions or cracking in the component.

A problem with the heating system of US2004/0056022 A1 is that the seals used to seal the gap between the build platform and the side walls can be deformed and fail under the high build temperatures. Furthermore, at the end of a build, the user must wait for the powder bed and component to cool before debuilding and removing the component from the powder bed fusion machine. When carrying out high temperature builds, the cooling process can take hours.

US2007/0023977 A1 discloses a device comprising a heating plate which can heat up to an operating temperature of between 300°C and 500°C. The building platform has cooling passages which extend transversely throughout the entire building platform. At least one inlet opening is provided in a peripheral wall of the build chamber. Ambient air is fed to the build chamber through the inlet opening. The build chamber also has at least one outlet opening connected to a discharge line.

After completion of a build, a carrier is lowered into a cooling position in which the cooling passages of the building platform are aligned with the inlet opening and the outlet opening in the peripheral wall of the build chamber. A volumetric flow flows through the cooling passages, thereby cooling at least the build platform. The cooling may be affected by a pulsed suction stream.

In addition, US2007/0023977 A1 discloses that it is also possible to provide for cooling passages or cooling hoses to be provided adjacent to the peripheral wall of the build chamber or in the peripheral wall of the build chamber, these cooling passages or cooling hoses contributing to cooling of the build chamber, the moulded body and the carrier.

A problem with such a device is that air cooling the build chamber, moulded body and the carrier via passageways or hoses can take a long time. Furthermore, the seals used to seal the gap between the build platform and the peripheral walls of the build chamber can be deformed and fail under higher build temperatures, such as those above 500°C.

When carrying out higher temperature builds, there is an increased likelihood of oxidisation of components with any oxygen that remains in the inert atmosphere surrounding the build surface. Therefore, it is desirable to carry out such builds in very low oxygen atmospheres. However, deformations and/or failures of the seal under the high temperature causes air to enter the volume surrounding the build surface increasing the oxygen content in the inert atmosphere and therefore, oxidisation of the material of the component and/or powder.

WO2010/007394 A1 discloses apparatus in which an inert atmosphere can be maintained both above and below the build platform, i.e. on both sides of the seal formed between the build platform and the build cylinder. By controlling the atmosphere both above and below the build platform to have the same pressure the problem of powder being naturally forced between the seal and a bore of the build cylinder can be mitigated. A vacuum or reduced pressure atmosphere can be formed both above and below the build platform. In use, the atmosphere both above and below the build platform is degassed to a rough vacuum and, once the atmosphere has been degassed, the chambers backfilled with argon. Such a method of forming an inert atmosphere may achieve lower oxygen levels at the start of the build than methods in which the inert atmosphere is formed by flushing a chamber with an inert gas without first forming a vacuum or reduced pressure atmosphere.

### Summary of the Invention

According to a first aspect of the invention there is provided a powder bed fusion apparatus in which an object is built in a layer-by-layer manner, the apparatus comprising a build sleeve, a build platform for supporting a powder bed, the build platform lowerable in the build sleeve and a least one channel integrated into the build sleeve for transporting a heat transfer liquid to cool or heat a portion of the build sleeve surrounding the powder bed.

By using a heat transfer liquid, faster cooling or heating of the powder bed and object can be achieved than through the use of a gas as a heat transfer fluid. Furthermore, by providing channels in the build sleeve, rapid heat transfer to/from the powder bed can be achieved over a relatively larger surface area of the surrounding walls of the build sleeve compared to attempting to cool or heat the powder bed and component via the build platform.

The apparatus may comprise a circuit for recirculation of the heat transfer liquid, the circuit including the at least one channel and a heat exchanger or chiller for cooling and/or heating the heat transfer liquid before the heat transfer liquid flows through the at least one channel.

The apparatus may comprise a controller for controlling operation of the circuit.

The controller may be arranged to control operation of the circuit to cool or heat the portion of the build sleeve after completion of the build to control a rate of cooling of the object and powder bed. The controller may be arranged to control operation of the circuit to actively cool the powder bed and object after completion of the build. This may reduce the time from completion of the build to a time when the object can be broken out from the powder bed and removed from the apparatus.

The controller may be arranged to control the circuit such that the portion of the build sleeve is cooled or heated during a build of an object. Cooling of the build sleeve during a build may reduce deformations of the build sleeve from heating of the powder bed by the laser and/or a preheating mechanism, such as a heating plate and consequential powder leakage and/or atmospheric leakage through the gap between the build sleeve and the build platform.

The controller may be arranged to control operation of the circuit to cool the portion of the build sleeve during the build.

The apparatus may comprise a seal for sealing a gap between the build platform and the build sleeve.

The seal may comprise a gas/hermetic seal that prevents atmosphere (gases) below the build platform from passing between the gap between the build platform and the build sleeve. The gas/hermetic seal may have an operating temperature below a bulk temperature to which the powder can be preheated (heating of the powder before is it is melted/sintered by exposure to the high energy beam) by a heating mechanism. Deformation of such a gas/hermetic seal may be prevented by the cooling of the build sleeve during and, optionally, after the build.

Alternatively, the seal may be a non-gas/non-hermetic seal that seals the gap to prevent powder from passing through the gap to below the build platform and the apparatus comprises a build chamber for maintaining an inert atmosphere both above and below the build platform. The build chamber may be as described in WO2010/007394 A1, which is incorporated herein by reference. Accordingly, the build chamber may be capable of holding a vacuum. The apparatus may comprise means for forming a vacuum in the build chamber, both above and below the build platform, such as a vacuum pump. It will be understood that "holding a vacuum" means that a negative pressure, such as a pressure of -500millibar or less or even more preferably -900millibar or less (relative to atmospheric pressure), can be formed throughout the build chamber (and is not simply a suction generating a reduced pressure at one location in the build chamber balanced by a positive pressure at another location).

The seal may have an operating temperature in an inert atmosphere above 500°C. The operating temperature may be above 1000°C and, more preferably above 2000°C and even more preferably above 3000°C. The seal may be a carbon-based seal, such as a carbon felt, for example a graphite felt and, in particular, a PAN based graphite felt. Alternatively, the carbon-based seal is a steel seal or a superalloy. In this way, the seal is not distorted by the high temperature builds and any gas that leaks past the seal is the inert gas of the atmosphere maintained above and below the build platform.

In order to achieve such high operating temperatures, the powder bed fusion apparatus may comprise a heating plate integrated in or located on the build platform. The heating plate may be arranged to heat the build platform to above 500°C.

According to a second aspect of the invention there is provided a powder bed fusion apparatus in which an object is built in a layer-by-layer manner, the apparatus comprising a build sleeve, a build platform for supporting a powder bed, the build platform lowerable in the build sleeve, a heating element integrated in or located on the build platform or the build sleeve, a seal for sealing a gap between the build platform and the build sleeve to prevent powder from passing through the gap and a build chamber for maintaining an inert atmosphere both above and below the build platform.

In this way, it is not necessary for the seal to be a gas/hermetic seal as well as a powder seal as gas passing from below to above the platform will be an inert gas. Typically seals having an operating temperature of above 500°C do not provide a gas/hermetic seal. The operating temperature of the seal may be above 1000°C and, more preferably above 2000°C and even more preferably above 3000°C. The seal may be a carbon-based seal, such as a carbon felt, for example a graphite felt and, in particular, a PAN based graphite felt or steel. In this way, the seal is not distorted by the high temperature builds and any gas that leaks past the seal is the inert gas of the atmosphere maintained above and below the build platform.

The build chamber may be as described in WO2010/007394 A1, which is incorporated herein by reference.

The powder bed fusion apparatus may comprise a cooling device for generating and introducing cooled inert gas into the build chamber to cool the build sleeve. The cooled inert gas may also be introduced to cool a lower surface of the build platform. An elevator mechanism for lowering the build platform may be located in a lower region of the build chamber and the cooled inert gas introduced to cool the elevator mechanism. The build chamber may comprise an upper chamber for maintaining an inert atmosphere above the build platform and a lower chamber for maintaining an inert atmosphere below the build platform, the build sleeve extending into the lower chamber and the cooling device arranged to introduce cooled gas into the lower chamber. The elevator mechanism may be located within the lower chamber.

The cooling device may be part of a gas circuit for recirculating gas through the build chamber.

The apparatus may comprise a drive for driving movement of the build platform, the drive located within the build chamber, and preferably within the lower chamber, and a gas nozzle for directing the cooled inert gas onto the drive.

According to a third aspect of the invention there is provided a powder bed fusion apparatus in which an object is built in a layer-by-layer manner, the apparatus comprising a build sleeve, a build platform for supporting a powder bed, the build platform lowerable in the build sleeve and a cooling mechanism for actively cooling the build sleeve, the cooling mechanism arranged to be activated during the build of the object.

The cooling of the build sleeve during the build may reduce or eliminate heating that causes unwanted distortions of the build sleeve.

According to a fourth aspect of the invention there is provided a method of manufacturing an object in a layer-by-layer manner using a powder bed fusion apparatus according to the first aspect of the invention, the method comprising recirculating a thermal transfer liquid through the at least one channel to cool or heat the build sleeve. The method may comprise recirculating the thermal transfer liquid through the at least one channel during the build of the object. The method may comprise recirculating the thermal transfer liquid through the at least one channel after completion of the build of the object.

According to a fifth aspect of the invention there is provided a method of manufacturing an object is built in a layer-by-layer manner using a powder bed fusion apparatus according to the second aspect of the invention, the method comprising generating and introducing a cooled inert gas into the build chamber to cool the build sleeve. The method may comprise generating and introducing a cooled inert gas into the build chamber during the build of the object. The method may comprise generating and introducing a cooled inert gas into the build chamber after completion of the build of the object.

According to a sixth aspect of the invention there is provided a method of manufacturing an object in a layer-by-layer manner using a powder bed fusion apparatus comprising a build sleeve, a build platform for supporting a powder bed, the build platform lowerable in the build sleeve, the method comprising cooling the build sleeve with a cooling fluid during the build of the object.

According to a seventh aspect of the invention there is provided a powder bed fusion apparatus in which an object is built in a layer-by-layer manner, the apparatus comprising a build sleeve and a build platform lowerable in the build sleeve for supporting a powder bed, wherein the build sleeve comprises walls made of one or more of a refractory metal or alloy thereof and a polycrystalline ceramic.

The refractory metals are niobium, molybdenum, tantalum, tungsten and rhenium. The alloys thereof may comprise a maximum operating temperature (as determined using the standard test methods as set out in ASTM E21-17) above 800°C, 1000°C and, most preferably, 1200°C. The alloy may be an austenitic alloy comprising a refractory metal. Examples of such alloys include steel grades 400C, 316 and 317.

In this way, the walls of the build sleeve are capable of withstanding extremely high temperatures required to process certain materials, such as refractory metals, such as tungsten, silicon carbides, super-alloys and ceramics (these materials having extremely high melting temperatures) without significant distortion or cracking. These materials may benefit from preheating of the powder bed to high temperatures, such as above 800°C, above 1000°C or above 1200°C such that the build sleeve walls must be capable of operating under such high temperatures. It may be desirable to preheat powder to such high temperatures for the processing of these materials in a crack free manner. The powder bed may be preheated to such high temperatures using heating elements contained in the build platform and/or within the build sleeve, for example resistive heaters, microwave emitters, infra-red heaters and/or high-energy beams, such as laser beams.

The build sleeve may be arranged such that an inwardly facing surface of the walls that contacts the powder bed is made of one or more of a refractory metal or alloy thereof and a polycrystalline ceramic. An outwardly facing surface of the walls of the build sleeve may be surrounded by other materials, such as insulative materials.

According to an eighth aspect of the invention there is provided a powder bed fusion apparatus in which an object is built in a layer-by-layer manner, the apparatus comprising a build sleeve and a build platform lowerable in the build sleeve for supporting a powder bed and a heating element, wherein walls of the build sleeve are ceramic, such as a polycrystalline ceramic, and the heating element is a resistive heater embedded within the walls. Heating of the powder from within, rather than from the outside, of the ceramic walls of the build sleeve may reduce unwanted heating of other components of the powder bed fusion apparatus. Other components of the powder bed fusion apparatus may not operate at the temperatures to which the powder bed is to be heated using the heating element.

The heating element may comprise a plurality of heating elements arranged to be activated successively as the build platform is lowered in the build sleeve. In this way, heating may only be provided for a volume surrounded by the build sleeve when that volume contains powder.

The ceramic walls may comprise internal cooling channels for the passage of a coolant or the maintenance of a partial or near-vacuum. The build sleeve may be cooled after the build to cool the powder bed and/or object to a temperature sufficiently low to allow recovery of the powder and/or removal of the object.

The ceramic may be zirconia, alumina or silicon nitride.

According to a ninth aspect of the invention there is provided a powder bed fusion apparatus in which an object is built in a layer-by-layer manner, the apparatus comprising a build sleeve, a build platform lowerable in the build sleeve for supporting a powder bed and a microwave/radio wave emitter for heating powder contained within the build sleeve, wherein the microwave/radio wave emitter is located to transmit microwaves/radio waves to the powder bed through the build sleeve.

Using microwaves to heat the powder through the build sleeve may be advantageous as the energy can be directed towards the desired location (the powder bed) and throughout a depth of the powder bed. Through appropriate material selection and microwave shielding, unwanted heating of other components by the microwaves can be avoided

The build sleeve is made of material that is transparent to microwaves/radio waves and can withstand temperatures above 500°C, more preferably above 800°C, even more preferably above 1000°C and, most preferably, 1200°C or above. The material may be a non-metal and preferably, is a ceramic. The ceramic may be a polycrystalline ceramic, such as zirconia, alumina or silicon nitride.

The microwave/radio wave emitter may comprise a plurality of microwave/radio wave emitters arranged to be activated successively as the build platform is lowered in the build sleeve. In this way, heating may only be provided for a volume surrounded by the build sleeve when that volume contains powder.

According to a tenth aspect of the invention there is provided a powder bed fusion apparatus in which an object is built in a layer-by-layer manner, the apparatus comprising a build chamber for maintaining an inert gas atmosphere, a build sleeve located in the build chamber and a build platform lowerable in the build sleeve for supporting a powder bed and a thermal barrier within the build chamber for blocking heat transfer from the powder bed, the thermal barrier comprising a vacuum chamber arranged to maintain at least a partial or near-vacuum therein when the build chamber is filled with an inert gas.

The partial or near-vacuum in the vacuum chamber reduces heat transfer across the barrier by conduction or convection. The vacuum chamber may comprise a reflective coating to reflect heat radiating from the powder bed.

The build sleeve may comprise or be surrounded by the vacuum chamber. The vacuum chamber acts to trap heat within the powder bed/build sleeve.

Alternatively, the vacuum chamber may provide a thermal barrier for blocking heat emanating from the powder bed from heating components located within or on the build chamber such as one or more of a mechanism for driving a wiper for spreading powder across the powder bed, an optical window in the build chamber for allowing a laser beam to enter the build chamber and a drive for driving movement of the build platform.

The powder bed fusion apparatus may comprise means, such as a vacuum pump and degassing valve, for forming a partial or near-vacuum in the build chamber and an inlet for supplying the build chamber with an inert gas and the vacuum chamber may comprise a valve for connecting the vacuum chamber to and isolating the vacuum chamber from the atmosphere in the build chamber. The powder bed fusion apparatus may comprise a controller arranged to control the valve such that the vacuum chamber is connected to the atmosphere in the build chamber during formation of the partial or near-vacuum and for isolating the vacuum chamber from the build chamber during backfilling of the build chamber with an inert gas. In this way, fusing of the powder can be carried out in an inert gas atmosphere whilst maintaining the vacuum within the vacuum chamber to reduce heat transfer by conduction or convection from the powder bed contained in the build sleeve

The controller may be further arranged to control the valve such that upon completion of a build of an object, the vacuum chamber is connected with the inert gas atmosphere in the build chamber to fill the vacuum chamber with the inert gas. The powder bed fusion apparatus may comprise a chiller for chilling inert gas supplied to the build chamber via the inlet. The vacuum chamber may comprise an inlet and an outlet controlled by respective valves for the circulation or inert gas, and in particular, cooled inert gas, through the vacuum chamber upon completion of the build of the object. In this way, the vacuum gap is removed at the end of the build to facilitate cooling of the powder bed and/or the object.

According to an eleventh aspect of the invention there is provided a powder bed fusion apparatus in which an object is built in a layer-by-layer manner, the apparatus comprising a build sleeve, a build platform lowerable in the build sleeve for supporting a powder bed and a linear actuator for driving movement of the build platform, wherein the build platform is connected to a shaft of the linear actuator via a thermal isolation sleeve, which surrounds at least an upper portion of the shaft to provide a thermal barrier to the transfer of heat from the build platform and build sleeve to the shaft.

Heating of the powder bed can result in heating of the build platform and build sleeve. The thermal isolation sleeve reduces heating of the shaft of the linear actuator reducing positioning inaccuracies of the build platform due to thermal expansion of the shaft.

The thermal isolation sleeve may comprise means for actively cooling the thermal isolation sleeve. For example, the means may comprise internal cooling channels within the thermal isolation sleeve for receiving a coolant, in particular a liquid coolant such as water or oil. Alternatively, the internal channels may be arranged for maintaining a partial or near-vacuum.

The build platform may be mounted on the thermal isolation sleeve. The cooling channels may pass through a section of the thermal isolation sleeve separating the build platform from the shaft of the linear actuator. In this way, the cooling channels act as a thermal break reducing or preventing the transfer of heat to the shaft from the build platform through the thermal isolation sleeve. The thermal isolation sleeve may comprise an upper mounting member on which the build platform is mounted and an intermediate mounting member to which the shaft is connected, the intermediate mounting member spatially separated from the upper mounting member such that there is a gap (of gas or a vacuum) therebetween. In this way, there is no direct route for the conduction of heat from the build platform to the shaft. The upper mounting member may close the thermal isolation sleeve at one end. The intermediate mounting member may comprise a web-like structure, in the case of the gap containing gas or form a lower wall of a closed chamber for maintaining a vacuum between the upper mounting member and the intermediate mounting member.

The build platform may be mounted on the thermal isolation sleeve using insulative material and/or point contacts. The insulative material and/or point contacts may act as a thermal break for the conduction of heat from the build platform.

The thermal isolation sleeve may be dimensioned so as to be spatially separated from the build sleeve. A gap between the build sleeve and the thermal isolation sleeve may comprise thermal insulation, such as carbon hardboard or the like.

The thermal isolation sleeve may have an extent in the longitudinal direction of the shaft such that, when the build platform is located at a top of the build sleeve, the thermal isolation sleeve extends to or below the bottom of the build sleeve.

The thermal isolation sleeve may be made of material having a low coefficient of thermal expansion, such as for example below 10x10⁻⁶ m/mK, preferably below 8 x10⁻⁶ m/mK and most preferably, below 4 x10⁻⁶ m/mK.

The build platform may bear a seal for sealing a gap between the build platform and the build sleeve to prevent powder from passing through the gap.

According to a twelfth aspect of the invention there is provided a powder bed fusion apparatus in which an object is built in a layer-by-layer manner, the apparatus comprising a build chamber for maintaining an inert atmosphere, a build sleeve located in the build chamber, a build platform lowerable in the build sleeve for supporting a powder bed, and a thermal barrier within the build chamber and located above the powder bed for blocking heat emanating from the powder bed from heating components located within or on the build chamber and a cooling system for actively cooling the thermal barrier.

For powder beds heated to high temperatures, such as above 800°C or 1000°C, the unwanted heating of components of the powder bed fusion apparatus can cause inadequate operation or possible failure of the components. Provision of an actively cooled thermal barrier protects these components from such unwanted heating.

The components may comprise one or more of a mechanism for driving a wiper for spreading powder across the powder bed, an optical window and/or roof in the build chamber for allowing a laser beam to enter the build chamber.

The thermal barrier comprises a solid body.

The thermal barrier may comprise internal cooling channels for receiving a coolant cooled by the cooling system. The coolant may be a liquid, such as water or oil, or a gas, such as air or an inert gas, such as argon or nitrogen.

The thermal barrier may be cooled by cooled inert gas introduced into the build chamber. The build chamber may comprise an inlet for supplying the cooled inert gas into the build chamber on a side of the thermal barrier distal from the powder bed. The thermal barrier may comprise apertures therein such that the cooled inert gas can flow therethrough.

The thermal barrier may separate a region of the build chamber comprising the window from a region of the build chamber for housing the powder bed.

The thermal barrier may separate a region of the build chamber housing the mechanism for driving the wiper from a region of the build chamber for housing the powder bed.

According to a thirteenth aspect of the invention there is provided a powder bed fusion apparatus in which an object is built in a layer-by-layer manner, the apparatus comprising a build chamber for maintaining an inert atmosphere, a build sleeve located in the build chamber, a build platform lowerable in the build sleeve for supporting a powder bed, and a wiper mechanism for spreading powder across the powder bed, the wiper mechanism comprising an arm for locating a ceramic wiper, the arm made of a metal material having a coefficient of thermal expansion that substantially matches that of the ceramic wiper.

A ceramic wiper is required for applications in which the powder bed is heated to high temperatures. A ceramic wiper having a uniform cross-sectional shape along its length is not too difficult to manufacture. However, the more complex shape of the arm would be difficult to manufacture from the same ceramic. Accordingly, manufacturing, for example machining or additive manufacturing, the arm from a metal simplifies manufacture. By selecting a metal having a coefficient of thermal expansion that substantially matches that of the ceramic wiper, stresses caused by differential thermal expansion during a build are avoided.

It will be understood that the term "substantially matches" as used above means that the coefficients of thermal expansion of the two materials are within +/- 3 x10⁻⁶ m/mK of each other

The metal material of the arm may have a coefficient of thermal expansion below 10x10⁻⁶ m/mK, preferably below 8 x10⁻⁶ m/mK and most preferably, below 4x10⁻⁶ m/mK. In this way, heating of the arm during building of the object causes minimal changes to the location of the wiper blade.

The ceramic wiper may be made of alumina and the metal arm of titanium.

According to a fourteenth aspect of the invention there is provided a module for insertion into a master build sleeve of a powder bed fusion apparatus, the module comprising a frame mountable in a fixed position in the master build sleeve, the frame defining a secondary build sleeve, a secondary build platform movable in the secondary build sleeve for supporting a powder bed and a heating element for heating the powder bed in the secondary build sleeve.

The heating element may be located within the secondary build sleeve and/or the secondary build platform.

The secondary build sleeve may comprise walls made of a material, as in accordance with the seventh aspect of the invention.

The heating element may comprise a microwave/radio wave emitter for heating powder contained within the secondary build sleeve, wherein the microwave/radio wave emitter is located to transmit microwaves/radio waves to the powder bed through the secondary build sleeve, as in accordance with the eighth aspect of the invention.

The module may comprise a thermal barrier for blocking heat transfer from the powder bed, the thermal barrier comprising a vacuum chamber arranged to maintain at least a partial or near-vacuum therein when the build chamber is filled with an inert gas, in accordance with the ninth aspect of the invention.

The apparatus may comprise a connecting member extending from the secondary build platform for connecting the secondary build platform to the master build platform so as to be movable therewith, the connecting member comprising a thermal barrier for reducing heat transfer from the secondary build platform to the master build platform. The thermal barrier may in accordance with that described with respect to the tenth aspect of the invention.

The module may comprise a thermal barrier for blocking heat transfer from the powder bed in the secondary build sleeve and a cooling system for actively cooling the thermal barrier.

The module may comprise sensors for sensing an attribute of the powder bed fusion process. The sensors may be temperature sensors and/or acoustic sensors

According to a fifteenth aspect of the invention there is provided a method of retrofitting a module according to the fourteenth aspect of the invention to a powder bed fusion apparatus, the method comprising locating the module in a master build sleeve of the powder bed fusion apparatus and connecting the heating element to a supply of power.

Typically, a conventional powder bed fusion apparatus would not provide an electrical and/or a cooling fluid connection to a build volume defined by the master build sleeve and master build platform. Accordingly, to retrofit a powder bed fusion apparatus with the module, an electrical connection to a power supply and, if required, connection to a coolant supply, must be provided. The method may comprise forming a channel in the build sleeve through which an electrical connection to a power supply and, if required, a connection to a coolant supply is/are fed. The channel may extend into a top plate that surrounds the master build sleeve. Alternatively, the channel may be formed such that the electrical connection to the power supply and/or the connection to the coolant supply may exit the master build sleeve below the top plate. In this way, the electrical connections and, if provided, the coolant connection do not interfere with the normal workings of the powder bed fusion apparatus, such as the spreading of powder over the top plate and powder bed, and may be insulated from the high temperatures to which the powder may be heated.

The method may further comprise mounting an insert into a build chamber of the powder bed fusion chamber to form a plenum chamber between the insert and an inner wall of the build chamber and connecting a chiller to cool inert gas fed into the plenum chamber. The insert may be arranged to be located between a window to the build chamber and the powder bed and comprise a secondary window for allowing a laser beam to be directed to the powder bed. The insert may comprise apertures therein for allowing the cooled inert gas to pass from the plenum chamber into a volume between the insert and the powder bed.

According to a sixteenth aspect of the invention there is provided a powder bed fusion apparatus in which an object is built in a layer-by-layer manner, the apparatus comprising a build platform for supporting a powder bed, the build platform lowerable in the build sleeve, a seal for sealing a gap between the build platform and the build sleeve to prevent powder from passing through the gap, a build chamber for maintaining an inert gas atmosphere both above and below the build platform, an inert gas circuit connected to the build chamber via an inlet and outlet and a cooling device for cooling the inert gas during transport through the inert gas circuit such that the inert gas circuit supplies a cooled inert gas to the build chamber, wherein the inlet is located in the build chamber to supply cooled inert gas to a region below the build platform and/or around the build sleeve.

The build chamber may comprise an upper build chamber arranged to enclose a working surface of the powder bed and a lower chamber for housing the inert gas atmosphere that contacts a lower surface of the build platform, wherein the inlet of the inert gas circuit to the build chamber supplies cooled inert gas to the lower chamber. The upper build chamber may confine the powder and gas-borne particles generated during the additive process to prevent the powder and gas-borne particles from entering the lower chamber. Inert gas in the upper build chamber may contact the working surface of the powder bed and inert gas in the lower chamber may contact a lower surface of the build platform. A gaseous connection may be provided for equalising the gas pressure in the upper build and lower chambers.

The build sleeve may extend into the lower chamber and the inlet located to deliver cooled inert gas to cool an outer surface of the build sleeve. An outer surface of the build sleeve may comprise cooling vanes for assisting cooling of the build sleeve.

A linear actuator for driving movement of the build platform may be located within the build chamber, and preferably within the lower chamber. The gas inlet may be located for delivering cooled inert gas to cool the linear actuator.

The introduction of cooled inert gas counters heating of the inert atmosphere in the build chamber caused by preheating of the powder bed using one or more heating elements and/or the heat generated through the solidification of selected regions of the powder bed using one or more laser beams. In particular, in a multi-laser beam system and/or a system using one or more high-powered laser beams, such as laser beams of 500W or more, the amount of energy being delivered to the powder bed can cause excessive heating within the build chamber and resultant failure in the build. Cooling of the inert gas atmosphere prevents such failures.

According to a seventeenth aspect of the invention there is provided a method of controlling a temperature of a powder bed fusion apparatus in which an object is built in a layer-by-layer manner, the apparatus comprising a build platform for supporting a powder bed, the build platform lowerable in the build sleeve, a seal for sealing a gap between the build platform and the build sleeve to prevent powder from passing through the gap and a build chamber for maintaining an inert gas atmosphere both above and below the build platform, the method comprising supplying cooled inert gas to the build chamber to cool the inert gas atmosphere below the build platform and/or around the build sleeve during the build of the one or more objects.

The method may comprise recirculating inert gas through the build chamber using an inert gas circuit and cooling the inert gas during transport through the inert gas circuit. In this way, heated inert gas is removed from the build chamber and replaced by cooler inert gas whilst limiting consumption of the inert gas through its reuse/recirculation.

### Description of the Drawings

**Figure 1** is a partially cut-away perspective view of a powder bed fusion apparatus according to a first embodiment of the invention;
**Figure 2** is a perspective view of a build sleeve of the powder bed fusion apparatus shown in Figure 1;
**Figure 3** is a perspective view of a build platform of the powder bed fusion apparatus shown in Figure 1 with dotted lines illustrating the heating element;
**Figure 4** is a perspective view of the build platform illustrating assembly of the seals;
**Figure 5** is a cut-away view of the build platform shown in Figures 3 and 4;
**Figure 6** is a schematic view of a gas circuit of a powder bed fusion apparatus according to a second embodiment of the invention;
**Figure 7** is a perspective view of a build sleeve of the powder bed fusion apparatus according to the second embodiment of the invention;
**Figure 8** is a perspective view of a build sleeve of the powder bed fusion apparatus according to a third embodiment of the invention comprising microwave heaters;
**Figure 9** is a schematic of a lower portion of powder bed fusion apparatus according to a fourth embodiment of the invention;
**Figure 10** is a schematic of a lower portion of powder bed fusion apparatus according to a fifth embodiment of the invention;
**Figure 11** is a schematic of an upper portion of the powder bed fusion apparatus that can be used with any of the lower portions described with reference to Figures 1 to 10;
**Figure 12** shows side view of a recoater according to an embodiment of the invention for use in a higher temperature powder bed fusion apparatus, such as described above; and
**Figure 13** is a module removably locatable in a build volume of a powder bed fusion apparatus, the module providing a heated build platform and heated build sleeve walls.

### Description of the Embodiments

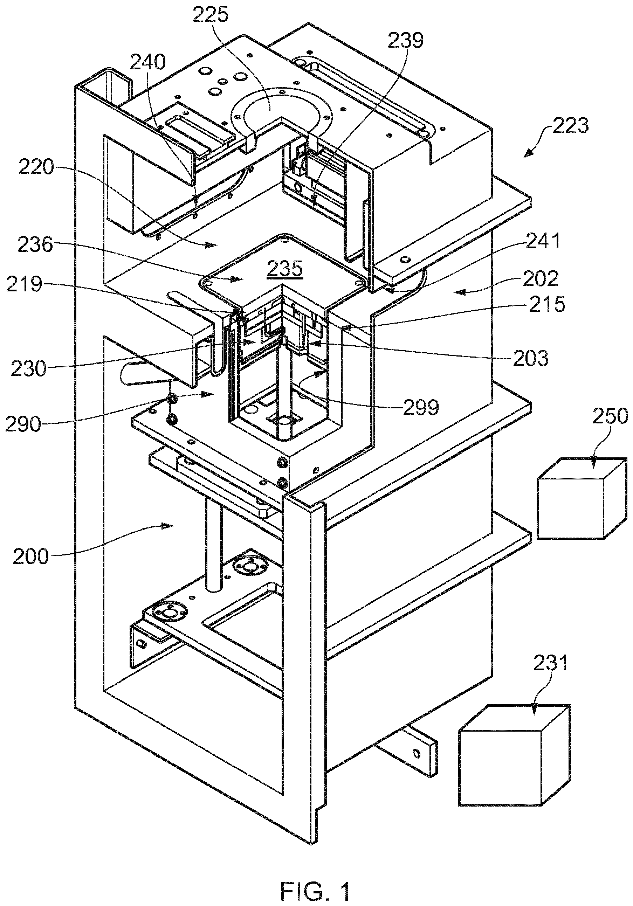

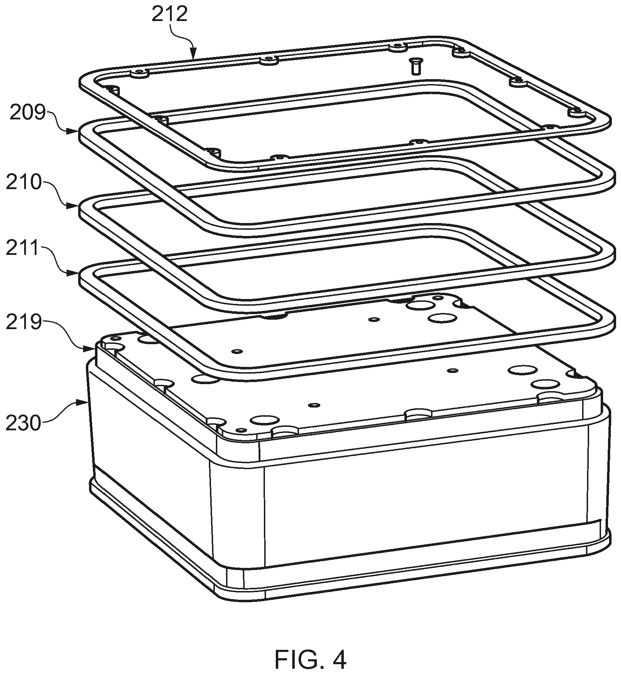

With reference to Figures 1 to 4, a powder bed fusion apparatus 223 according to an embodiment of the invention includes a build chamber 202 that can be sealed from the external environment. The build chamber 202 is divided into an upper processing chamber 220 and a lower chamber 200 by top plate 215 and a build platform 230 reciprocally movable within a bore 299 of a build sleeve 290. The build platform 230 is moved by an elevator mechanism (not shown) located in the lower chamber 200. The build platform 230 is sealably engaged with the bore 299 of the build sleeve 290 to prevent egress of powder into the lower chamber 200. This is achieved by seals 209, 210, 211 (see Figure 4), associated with an edge of the build platform 230, which physically engage with the bore 299 of the build sleeve 290. The plate 215, build sleeve 290, build platform 230 and associated seals 209, 210, 211 function to form a barrier for the powder such that the powder remains in the processing chamber 220 and does not travel to the lower chamber 200.

The processing chamber 220 encloses a build surface 235 on which a three-dimensional object can be formed. The processing chamber 220 houses a wiper 239 for spreading a layer of powder over the build surface 235. Optical access to the processing chamber 220 for a high-powered laser beam is provided via window 225. A high-powered laser beam can be directed though the window 225 for scanning over the build surface 235 to consolidate successive layers of powder. In this embodiment, the build surface 235 is provided by a build substrate plate 236 supported by the build platform 230 and, in use, the build platform 230 is lowered to accommodate the object as it is formed layer by layer. The processing chamber 220 allows control of the atmosphere directly above the build platform 230 and the upper surface of the build platform 230 is subject to the atmosphere of the processing chamber 220 even as the build platform 230 is lowered. The build chamber 202 is capable of holding a vacuum, for example to at least -950millibar (relative to atmospheric pressure).

The lower chamber 200 allows the atmosphere below the build platform 230 to be controlled and the lower surface of the build platform 230 is subject to the atmosphere of the lower chamber 200 even as the build platform 230 is lowered.

The upper and lower chambers 220, 200 are coupled to each other via an opening (not shown) that allows the pressure in each chamber to be equalised. Preferably there is a filter within the opening to prevent powder and soot from entering the lower chamber. This arrangement provides the advantage that the pressure immediately above and below the build platform 230 may be maintained at the same level. The pressure above and below the build platform 230 may be maintained at a vacuum pressure during the build or at a super-atmospheric pressure during the build, such as 10 millibar (relative to atmospheric pressure). Such a super-atmospheric pressure may be achieved by backfilling the build chamber 202 with an inert gas, such as argon or nitrogen, via inlet 245.

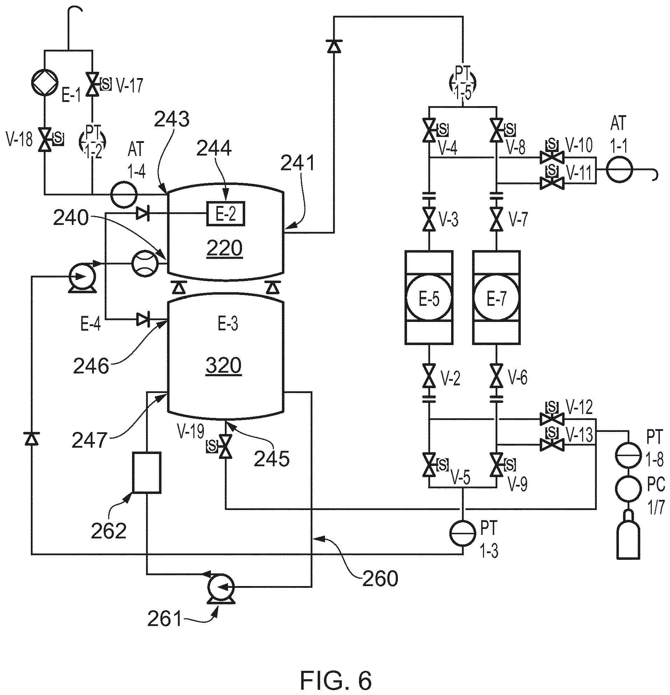

The build chamber 202 comprises a gas nozzle aperture 240 and a gas exhaust aperture 241 for generating a gas flow through the processing chamber 220 across the build platform 230. The gas flow acts as a gas knife carrying condensate created by the melting of the powder with the laser away from the build area. The apparatus comprises a further gas nozzle 244 (see Figure 6) for generating a gas flow across the window 225. This gas flow may prevent condensate from collecting on the window 225, which in turn could affect the quality of the laser beam delivered through the window 225.

The gas flow circuit for forming the inert atmosphere and the gas knife may be as described in WO2016/079494. A vacuum can be formed in both the processing chamber 220 and the lower chamber 200 using outlet 143, valve V-18 and vacuum pump E-1, as shown in Figure 6.

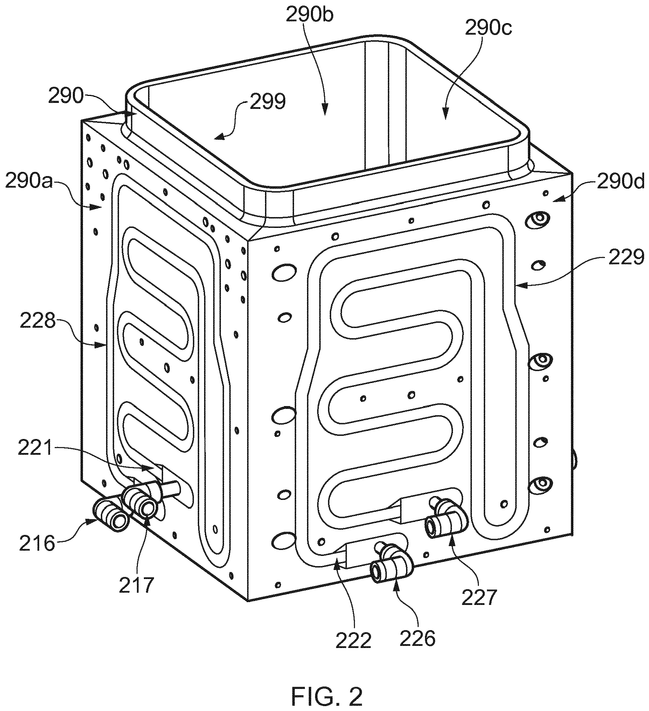

Referring to Figure 2, the build sleeve 290 has a square cross-section formed of four walls 290a, 290b, 290c, 290d secured together. Integrated into each wall 290a, 290b, 290c, 290d is a cooling channel 228,229. Each wall 290a, 290b, 290c, 290d may be formed with channel 228, 229 using conventional vacuum brazing techniques or using conventional machining. Fitted within each channel 228, 229 is tubing 221, 222 for carrying the thermal transfer fluid. The tubing 221, 222 may be press fitted into the channel 228, 229. The tubing comprising a pair of connectors 216, 217; 226, 227 for connecting the tubing 221, 222 to hoses (not shown) for the transport of a thermal transfer liquid to and from the channels 228, 229 and a chiller 231. Plates (not shown in Figure 2) are secured over the walls to cover the tubing 221, 222 and channels 228, 229.

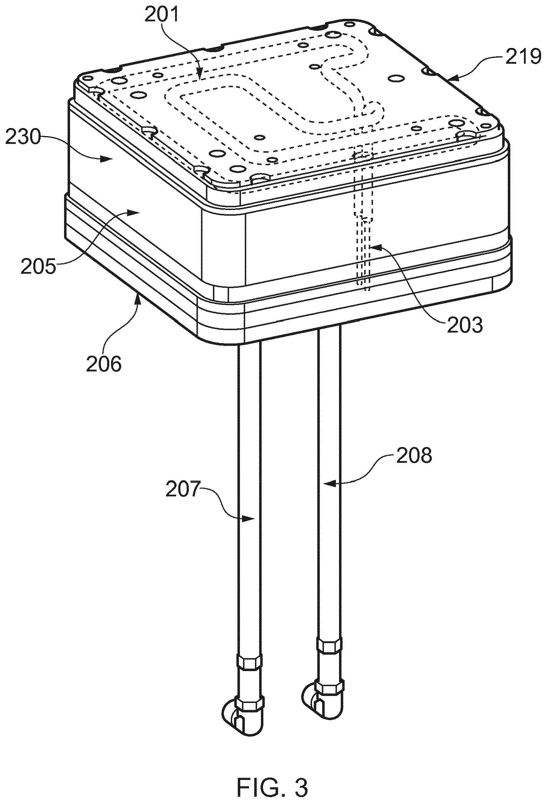

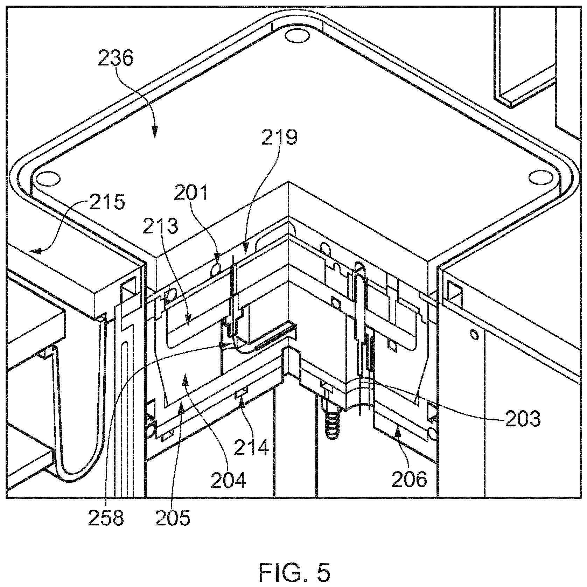

Referring to Figures 3 to 5, the build platform 230 comprises a top heating plate 219 having an internal channel therein for a heating element 201. The heating plate 219 is arranged such that, when the build substrate plate 236 is supported by the platform 230, the heating plate 201 contacts the build substrate plate 236 to provide for efficient heat transfer. Electrical connections 203 for the heating element 201 pass through the bottom of the build platform 230. The heating element 201 is held in place by a clamping plate 213 and thermally insulative material 204, such as silicate and/or fibre cement material, is provided below the heating plate 219 and clamping plate 213 to limit heat loss through the bottom of the build platform 230 and consequential heating of the atmosphere in the lower build chamber 200. The heating plate 219, clamping plate 213 and insulation 204 are housed within a suitable housing 205.

A cooling plate 206 is attached to the bottom of the housing 205. The cooling plate 206 comprises channels 214 for carrying a coolant for cooling a bottom surface of the build platform 230. The cooling plate is formed by vacuum brazing two machined plates together. The cooling channels are connected to a coolant, such as water, via pipes 207, 208. The pipes 207, 208 move with the platform 230 during the reciprocal movement in the build sleeve 290.

Three carbon felt seals 209. 210, 211 are secured around the top of the build platform 230 by a fastening ring 212. The carbon felt seals 209, 210, 211 are arranged to contact the bore 299 of the build sleeve 290 to prevent leakage of powder through the gap between the build platform 230 and the build sleeve 290.

A temperature sensor, in this embodiment a thermocouple 258, is provided for measuring a temperature of the heating plate 219.

Temperature sensors (not shown) are also provided for monitoring a temperature of the build sleeve 290.

The temperature sensors 258, heating element 201 and chiller 231 are connected to a controller 250. The controller is arranged to control the heating element 201 and chiller 231 dependent upon the stage of the build and the temperatures measured by the sensors 258. In use, during the build, the controller activates the heating element 201 to heat powder and any material consolidated within the powder bed to above 500°C. Simultaneously, the chiller 231 is activated to cool the build sleeve 290 and bottom of the build platform 230 to prevent distortion of the build sleeve 290 and heating of devices present in the lower chamber 200. The chiller 231 may be operated to maintain the build sleeve 290 at about 70°C. Typically, this would be achieved with a coolant temperature of about 25°C. These conditions are maintained until the build is complete.

At the end of the build, the controller 250 deactivates the heating element 201 to allow the object that has been built and the powder bed to cool. During this time, the controller 250 may control the chiller 231 to actively cool the powder bed and object. During such a cooling operation, the chiller 231 may be controlled to vary the temperature of the coolant to achieve a required cooling profile and/or cooling time.

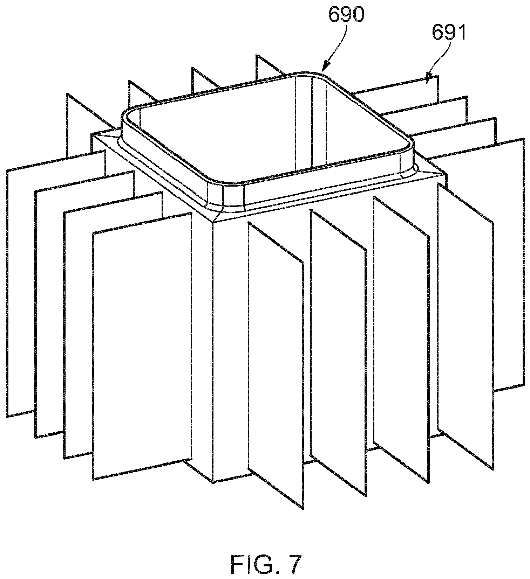

In a second embodiment of the invention shown in Figures 6 and 7, cooling of the build sleeve 290 and bottom of the build platform 230 is achieved through the introduction of a cooled inert gas stream into the lower chamber 200 housing the build sleeve 690. The cooled inert gas contacts and circulates around an outer side wall of the build sleeve 690 and a lower surface of the build platform cooling the build sleeve 690 and the build platform. Figure 6 illustrates a gas circuit for generating such a cooled gas flow. Much of the gas flow circuit and its operation is as described in WO2016/079494, which is incorporated herein by reference. In addition, the gas circuit of this embodiment of the invention comprises an additional gas recirculation loop 260 for recirculating cooled inert gas through the lower chamber 200. The recirculation loop 260 comprises a feedline to the lower chamber 200 via inlet 247 and a return line from the lower chamber 200. A pump 261 recirculates the inert gas through the lower chamber 200. A chiller 262, located downstream of the pump 261, is provided to cool the inert gas before it is recirculated back into the lower chamber 200. Operation of the pump 261 and chiller 262 may be carried out in a like manner to the first embodiment of the invention.

Figure 7 shows a build sleeve 690 of this embodiment. Cooling vanes 691 are provided on an outer surface of the build sleeve 690 to facilitate the dissipation of heat from the build sleeve 690. The cooled inert gas is caused to flow through the gaps in the cooling vanes 691 to remove heat from the region surrounding the build sleeve 690, thus cooling the build sleeve 690. The cooling of the build sleeve 690 and the lower surface of the build platform using cooled inert gas may be carried out during the build and after completion of the build.

The second embodiment may have the advantage that separate cooling channels in the build sleeve and delivery of a cooling liquid may not be required. Accordingly, this may simplify the design of the apparatus.

In a further embodiment, heating elements are provided in the build sleeve to heat the powder in addition to the heating element in the build platform. In such an embodiment, in order to maintain the integrity/to prevent unwanted deformation of the build sleeve, the build sleeve may comprise an outer shell of ceramic material within which the heating elements are contained. The inner walls of the build sleeve may be made of a conductive material, such as a metal for efficient heat transfer from the heating elements to the powder. The ceramic outer shell may comprise cooling channels for carrying a heat transfer liquid, like the first embodiment of the invention, and/or may be cooled by cooled inert gas introduced into a lower chamber, as in the second embodiment of the invention. Temperatures of greater than 1000°C and more preferably, greater than 1200°C, may be achieved with such an arrangement.

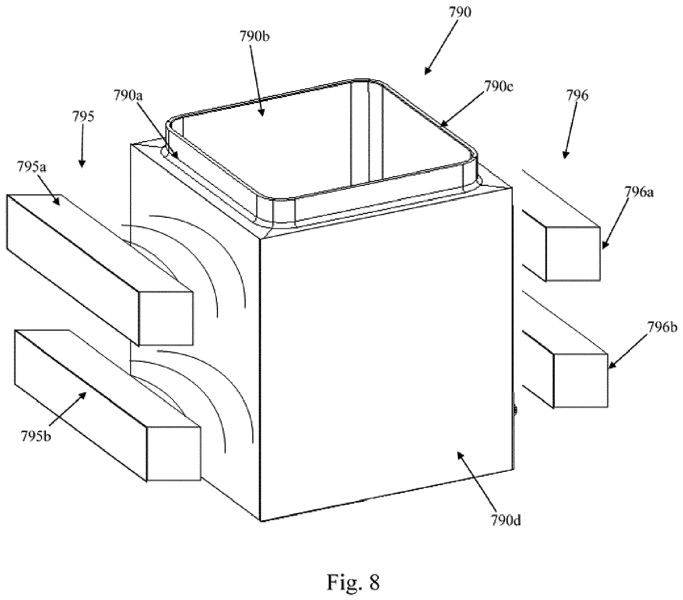

Figure 8 shows a further embodiment of the invention. Like reference numerals but in the series 700 have been used to refer to features of this embodiment that correspond to features of the previously described embodiment.

Figure 8 differs from the previous embodiment in that the build sleeve 790 is formed of ceramic material. In this embodiment, no inner wall of conductive material is provided. The ceramic material is a polycrystalline ceramic, such as zirconia or alumina, which can satisfactorily operate at temperatures above 1000°C. Such temperatures may be desirable for processing high-temperature super alloys. The build sleeve 790 is formed of four separate walls 790a, 790b, 790c and 790d that are abutted together to form a powder tight build sleeve 790. Each ceramic wall 790a, 790b, 790c, 790d may be formed using known additive techniques, wherein selectively deposited layers of ceramic material are sintered together to form the wall.

Arrays of microwave emitters 795, 796 are provided around the build sleeve 790. The ceramic material of the build sleeve 790 is transparent to microwaves such that powder contained in the build sleeve 790 can be heated by the microwaves passing through the build sleeve walls. On each side of the build sleeve 790, a plurality of microwave emitters 795a, 795b, 796a and 795b are stacked and can be selectively activated as the build platform is lowered. Selective activation of the microwave emitters 795a, 795b, 796a and 795b includes controlling the intensity of microwaves emitted therefrom so as to control temperatures across the powder bed contained in the build volume. In particular, when used in concert with a heating element in the build platform, an effect of the heater in the build platform on a temperature of the top layer of powder will decrease as the build platform is lowered. Increasing the intensity of the microwaves emitted from the microwave emitters 795a, 795b, 796a and 795b as the build platform is lowered can be used to compensate for this reduced heating effect of the heater in the build platform.

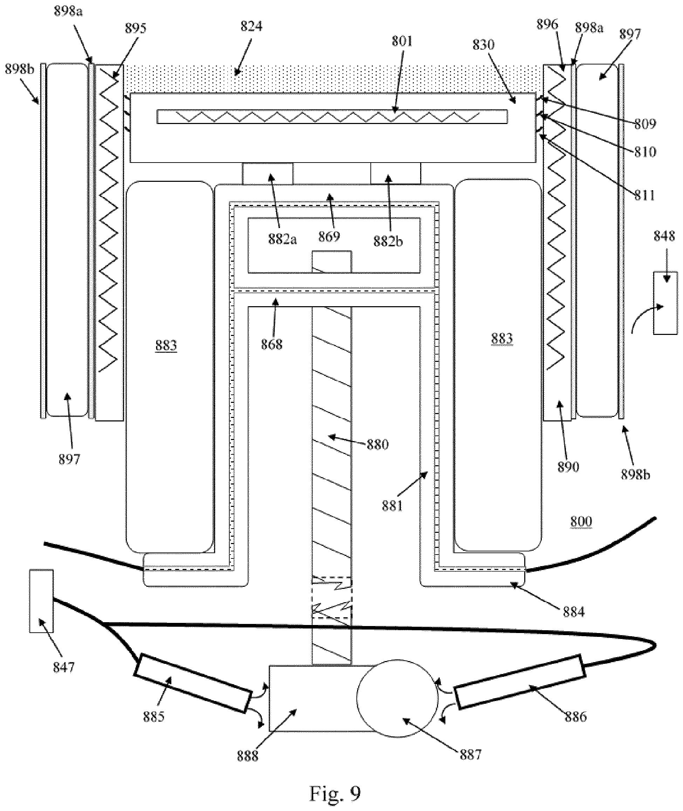

Figure 9 shows a further embodiment of the invention. Like reference numerals but in the series 800 have been used to refer to features of this embodiment that correspond to features of the previously described embodiments.

In the embodiment of Figure 9, resistive heating elements 895, 896 are provided embedded within the ceramic walls of the build sleeve 890. The ceramic walls with embedded resistive heating elements 895, 896 may formed in accordance with that described in DE102013108014. The resistive heating elements 895, 896 act to heat the powder bed along with the heater 801 in the build platform 830. The heating element 801, 895 and 896 may be arranged to heat the powder bed 824 to temperatures above 800°C and preferably, above 1000°C. To withstand these temperatures carbon-felt seals 809, 810, 811, as described above, may be used. However, other materials may be used for the seals 809, 810, 811, such as steel, a superalloy or other metal material that can withstand such temperatures.

In an alternative embodiment, the walls of the build sleeve 890 also include cooling channels to assist in the cooling of the build sleeve after the object has been formed. The walls of the build sleeve 890 are surrounded by insulation in the form of carbon-hardboard 897 covered by an inner and outer graphite foil 898a and 898b. The insulation aids in the retention of heat in powder bed 824.

The build platform 830 is mounted to a lead screw 880 of a linear actuator for driving movement of the build platform 830 via a thermal barrier, which thermally isolates the lead screw 880 from the build platform 830 to prevent unacceptable thermal expansion of the lead screw 880 during the build. In this embodiment, the thermal barrier is an actively cooled thermal isolation sleeve 881 and blocks 882a, 882b of thermally insulative material. The thermal isolation sleeve 881 is actively cooled using a coolant, such as water. To this end, the thermal isolation sleeve 881 has cooling lines 884 running therethrough for the transport of water. The cooling lines are part of a coolant recirculation loop (not shown), the recirculation loop comprising a cooling device (not shown-typically external to the build chamber) for cooling the coolant. The thermal isolation sleeve 881 may be built using additive manufacturing, in which the part is built up in a layer-by layer process, in order to provide cooling lines/channels 884 that conform to the shape of the sleeve and provide efficient cooling. Mounted around the thermal isolation sleeve 881 is insulation, for example carbon hardboard 883.

The thermal isolation sleeve 881 extends around an upper portion of the lead screw 880 to isolate the lead screw 880 from the heat of the build platform 830 and build sleeve 890. The thermal isolation sleeve 881 has an extent such that when the build platform 830 is located at a top of the build sleeve 890, the thermal isolation sleeve 881 covers the lead screw 880 up to or beyond a bottom of the build sleeve 890. The thermal isolation sleeve 881 has an intermediate mounting member 868 to which the lead screw 880 is connected and an upper mounting member 869 on which the build platform 830 is mounted. The intermediate mounting member 868 (and the lead screw 880) is spatially separated from the upper mounting member 869 to further thermally isolate the lead screw 880 from the build platform 830.

The lower chamber 800 is cooled like the previous embodiments, with a cooled inert gas flow that is delivered into the lower chamber 820 via inlet 847 and exits via outlet 848. However, gas lines 885, 886 may be connected to the gas inlet 847 to direct the cooled gas onto motor 887 and gear box 888 of the linear actuator, which drive movement of the lead screw 880. This may help to maintain the motor 887 and lead screw 888 below maximum operating temperatures.

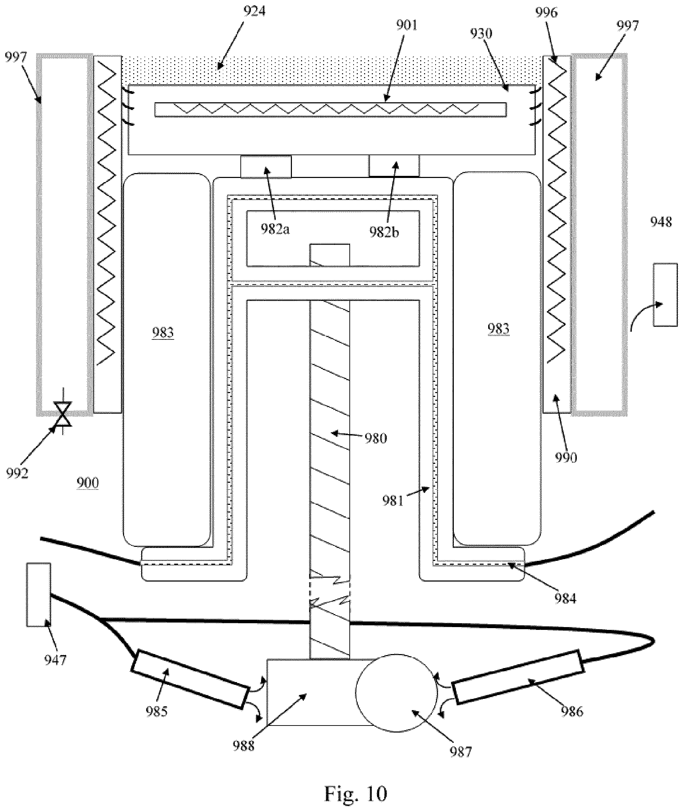

Figure 10 illustrates an alternative embodiment for the lower chamber 900 and build sleeve 990. Like reference numerals but in the series 900 have been used to refer to features of this embodiment that correspond to features of the previously described embodiments.

In this arrangement, rather than using carbon hardboard and graphite foil as insulation around the build sleeve 990, a vacuum chamber 997 is located around the build sleeve 990. A valve 992 is operable to open and close an inlet/outlet of the vacuum chamber 997 to the lower chamber 900. In use, during the formation of a vacuum in the build chamber, the vacuum chamber 997 is connected via valve 992 to the lower chamber 900 such that a vacuum is formed therein. The valve 992 is then closed before the build chamber is backfilled with an inert gas through inlet 245. In this way, during the build, the vacuum chamber 997 contains a vacuum that acts to insulate the build sleeve 990. At the end of a build, the valve 992 can be opened to the cool inert gas in the lower chamber 900 removing the insulative effect of the vacuum to facilitate the cooling the build sleeve 990 and/or the powder bed 924 contained in the build sleeve 990. To this end, it may be useful for the vacuum chamber 997 to have an inlet and a separate outlet to allow cooled inert gas to be circulated therethrough.

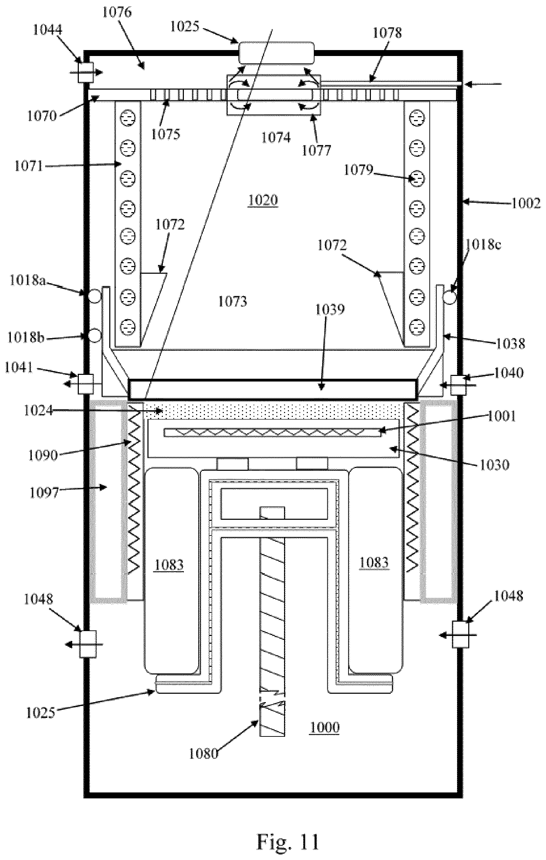

Figure 11 shows an arrangement for the upper chamber 1020 that may be used with any of the above described embodiments for the lower chamber 200, 800, 900. Like reference numerals but in the series 1000 have been used to refer to features of this embodiment that correspond to features of the previously described embodiments.

For high temperature builds, such as builds above 800°C and/or above 1000°C, radiative heating of components spaced from the powder bed becomes a significant issue. In particular, heating of the optical scanner (not shown) through window 1025 can cause significant drift in the accuracy of the steering of the laser beam by the scanner and heating of the wiper mechanism can damage and/or distort the wiper mechanism.

Accordingly, in this embodiment, the upper chamber is provided with shielding 1070, 1071, 1072, 1073 to protect components within or connected to the upper chamber 1220 from heat radiating from the powder bed 1024. Shielding 1070 comprises a "false" ceiling of, for example, carbon-felt having a secondary window 1074 of fused silica. The "false" ceiling is spaced from the roof of the build chamber 1002 to define a plenum chamber 1076 therebetween. An array of apertures 1075 are provided in the "false" ceiling 1070 to allow gas from the plenum chamber 1076 to pass through the "false" ceiling and create a generally downwards flow towards the powder bed 1024. A gas inlet 1044 is provided for the introduction of inert gas into the plenum chamber. The inert gas may be a cooled inert gas to cool both the "false" ceiling 1070, including secondary window 1074, and the chamber window 1025.

A gas flow device 1077 is provided adjacent the windows 1025 and 1074 for directing jets of cooled gas onto the windows 1025, 1074 in addition to exposure to the cooled gas in the plenum chamber. The gas flow device 1077 may receive gas from a gas supply line 1078.

A further component of the shielding is cooling jacket 1071 comprising a plurality of vertical walls extending around the upper processing chamber 1020. At least two and preferably, all four of the vertical walls comprise cooling channels 1079 therein for passing a coolant, such cooled air, therethrough. The cooling jacket 1071 acts to protect components, such as the driving mechanism (not shown) and rails 1018a, 1018b, 1018c for wiper 1039 from heat radiating from the powder bed 1024.

Due to the intensity of radiating heat in close proximity to the powder bed 1024, supplementary shielding 1072 may be provided in the form of highly reflective angled surfaces. This supplementary shielding may act to further protect the driving mechanism and rails 1018 for wiper 1039 from heat radiating from the powder bed 1024.

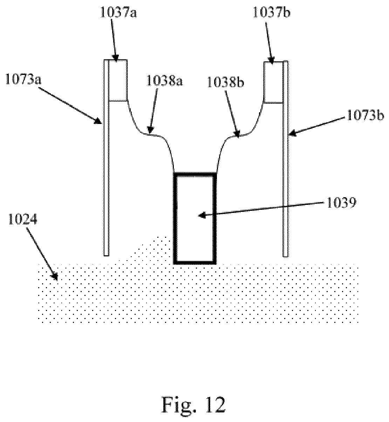

As shown in Figure 12, the wiper 1039 is connected to two shielding plates 1073a and 1073b to be movable therewith. The shielding plates 1073a, 1073b extend substantially along the length of the wiper 1039 and act to reflect heat radiating from the powder bed 1024 away from the wiper 1039. This may have particular value when the wiper is stationary at either side of the powder bed 1024. As the wiper moves across the powder bed, the gas flow between gas nozzle 1040 and gas exhaust 1041 may act to carry heat away from the wiper 1039, whereas in the stationary position either side of the powder bed 1024, the cooling of the wiper 1039 due to the gas flow may be reduced. The shielding plates 1073a and 1073b are connected to the wiper arms 1038a, 1038b respectively by thermally insulative members 1037a, 1037b, which provide a thermal conduction break between the shielding plates 1073a, 1073b and the wiper arms 1038a, 1038b. The wiper arms 1038a, 1038b may be made of a machinable metal material having a coefficient of thermal expansion that substantially matches that of the ceramic wiper blade 1039. For example, the ceramic wiper blade 1039 may be made of alumina and the wiper arms 1038a, 1038b made of titanium. The coefficient of thermal expansion for both the wiper blade and the wiper arms may be below 10x10⁻⁶ m/mK. In this way, variations in the position of the wiper blade 1039 during the build are reduced compared to the use of conventional steel arms. The wiper blade 1039 may be formed of the same material as the build material, for example a super alloy or ceramic such that the wiper blade 1039 can withstand the heat at the powder bed 1024.

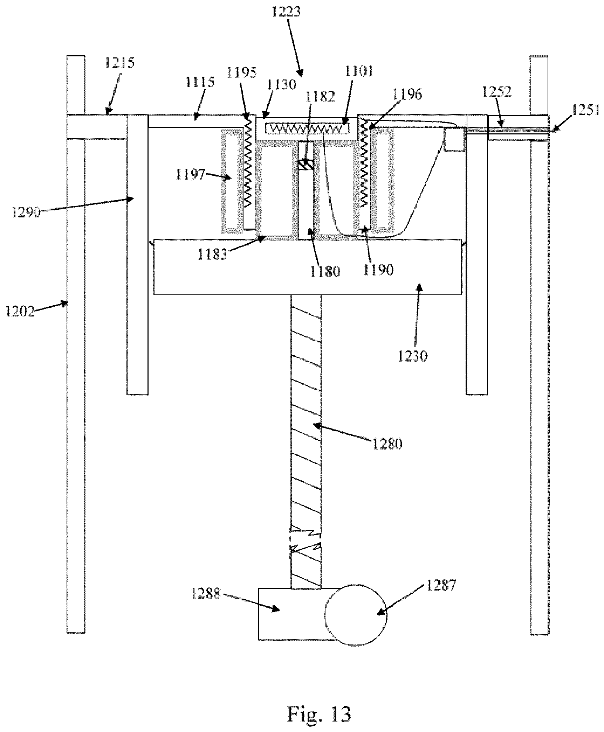

Figure 13 illustrates a module 1123 that is removably insertable into the build volume of an additive manufacturing apparatus so as to provide a build volume of reduced size, wherein the powder bed can be heated. Like reference numerals but in the series 1100 have been used to refer to features of the module that correspond to features of the previously described embodiments and reference numerals in the series 1200 have been used to refer to features of the additive manufacturing apparatus, into which the module is inserted, which correspond to features of the previously described embodiments.

Modules for inserting into build volumes of additive manufacturing apparatus are known from WO 2016/055523, but these do not have the ability to heat the powder bed. It is desirable for this module 1100 to be retrofittable to additive manufacturing apparatus that do not have a heating capability.

The module 1100 comprises a frame that defines a top plate 1115 and a build sleeve 1190. A build platform 1130 is movable within the build sleeve 1190. The build platform 1130 is connectable to a master build platform 1230 of the additive manufacturing apparatus by a connecting column 1180 such that movement of the build platform 1130 within the build sleeve 1190 can be achieved through movement of the build platform 1230. The column 1180 includes a thermal break 1182 to limit conduction of heat from the build platform 1130 to the master build platform 1230. Contained within the build platform 1130 and the build sleeve 1190 are heating elements 1101, 1195, 1196 for heating powder in the reduced build volume. The build sleeve 1190 and build platform 1130 may be formed as described above with refence to Figures 8 to 12.

Insulation 1197 and 1183 is provided around the build sleeve 1190 and the column 1180. The insulation of each part 1197, 1183 may be carbon hardboard and a reflective foil or a sealable vacuum chamber as described above.

To power the heating elements 1101, 1195, 1196, electrical connections are provided to the heating elements. In a typical additive manufacturing apparatus, no power is supplied to the build volume. Accordingly, as part of a retrofit of the module 1100 to an additive manufacturing apparatus, a channel 1252 may be drilled into the build sleeve 1190, for example via a top plate 1215 and a power line 1251 run into the build volume through the build sleeve walls. If there is a desire to return the additive manufacturing apparatus to its original condition, a stop could be inserted into an opening to the hole 1252 in the build sleeve/top plate. Wires connect the heating elements 1101, 1195, 1196 to the power line 1251, with the wire to heating element 1101 have sufficient slack to accommodate the movement of the build platform 1130.

An insert may be provided for inserting into an upper processing chamber to provide all or some of the features as described with reference to Figure 11.

In a further embodiment (not shown), cooling lines as well as power lines are provided to the module for delivering coolant to cool parts, such as the build sleeve 1190 and column 1180 during the build. In an alternative embodiment, the power lines and/or cooling lines may be run over a surface of the top plate 1215.

It will be understood that modifications and alterations can be made to the above described embodiments without departing from the invention as defined herein. For example, heating of the powder bed may be carried out by means other than a heated base plate, for example by induction heating as described in US2013/0309420 or microwave heating as described in WO2016/051163. Furthermore, apparatus for thermally protecting components from heat generated at the powder bed may be used with powder bed fusion apparatus without means for preheating the powder bed. For example, in a multi-laser powder bed fusion apparatus, an amount of energy can be delivered to the powder bed in a short period of time causing significant heating within the build chamber. Accordingly, means, such as those described above, may be required for protecting components within the build chamber from this heat.

## Claims

1. A powder bed fusion apparatus in which an object is built in a layer-by-layer manner, the apparatus comprising a build sleeve, a build platform for supporting a powder bed, the build platform lowerable in the build sleeve, a heating element integrated in or located on the build platform or the build sleeve, a seal for sealing a gap between the build platform and the build sleeve to prevent powder from passing through the gap and a build chamber for maintaining an inert atmosphere both above and below the build platform.

2. A powder bed fusion apparatus according to claim 1, wherein the seal is a non-gas/non-hermetic seal.

3. A powder bed fusion apparatus according to claim 1 or claim 2, wherein an operating temperature of the seal is above 500°C.

4. A powder bed fusion apparatus according to claim 3, wherein the operating temperature of the seal is above 1000°C.

5. A powder bed fusion apparatus according to any one of claims 1 to 4, wherein the seal is a carbon-based seal.

6. A powder bed fusion apparatus according to any of claims 1 to 5, comprising a cooling device for generating and introducing cooled inert gas into the build chamber to cool the build sleeve.

7. A powder bed fusion apparatus according to claim 6, comprising an elevator mechanism for lowering the build platform located in a lower region of the build chamber and the cooled inert gas introduced into the build chamber cools the elevator mechanism.

8. A powder bed fusion apparatus according to claim 6 or claim 7, wherein the build chamber comprises an upper chamber for maintaining an inert atmosphere above the build platform and a lower chamber for maintaining an inert atmosphere below the build platform, the build sleeve extending into the lower chamber and the cooling device arranged to introduce cooled gas into the lower chamber.

9. A powder bed fusion apparatus according to any one of preceding claims, wherein walls of the build sleeve are ceramic and the heating element is a resistive heater embedded within the walls.

10. A powder bed fusion apparatus according to any one of the preceding claims, wherein walls of the build sleeve are ceramic and comprise internal cooling channels for the passage of a coolant or the maintenance of a partial or near-vacuum.

11. A powder bed fusion apparatus according to any one of the preceding claims, wherein the build sleeve comprises walls made of one or more of a refractory metal or alloy thereof and a polycrystalline ceramic.

12. A powder bed fusion apparatus according to any one of claims 9 to 11, wherein the ceramic is zirconia, alumina or silicon-nitride.

13. A method of manufacturing an object built in a layer-by-layer manner using a powder bed fusion apparatus according to any one of claims 1 to 8, the method comprising generating and introducing a cooled inert gas into the build chamber to cool the build sleeve.

14. A method according to claim 13, comprising generating and introducing a cooled inert gas into the build chamber during the build of the object.

15. A method according to claim 13 or claim 14, comprising generating and introducing a cooled inert gas into the build chamber after completion of the build of the object.
